# EUROPÄISCHE PATENTSCHRIFT

(11) **EP 1 795 754 B1**
(45) Veröffentlichungstag und Bekanntmachung des Hinweises auf die Patenterteilung: **28.12.2016**
(21) Anmeldenummer: 06124932.2
(22) Anmeldetag: 28.11.2006
(51) Int. Cl.: F04D 13/02, F04D 29/62, F04D 13/06

(54) **Universalflansch**
Universal flange
Bride universelle

(30) Priorität: 06.12.2005 DE 102005058274
(43) Veröffentlichungstag der Anmeldung: 13.06.2007
(73) Patentinhaber: Hilge GmbH & Co. KG, 55294 Bodenheim (DE)
(72) Erfinder: RUST, Heinz, 55299, Nackenheim (DE)
(74) Vertreter: WSL Patentanwälte Partnerschaft mbB

(56) Entgegenhaltungen:
- DE-U1- 29 618 475
- DE-U1- 29 905 500
- US-A- 6 036 452

## Beschreibung

Die vorliegende Erfindung betrifft eine Pumpe, insbesondere eine Kreiselpumpe, mit einem Pumpengehäuse, einem Motor sowie einer Laterne, über die das Pumpengehäuse mit dem Motor verbunden ist.

Solche Pumpen sind seit geraumer Zeit bekannt. Die Laterne, die häufig als einstückiges Gußbauteil ausgestaltet ist, hat häufig an ihrem pumpenseitigen Ende eine beliebig ausgestaltete Vorrichtung zur Befestigung am Pumpengehäuse und an ihrem anderen Ende einen Befestigungsflansch, an dem der im allgemeinen elektrische Motor für die Pumpe befestigt wird. Die Laterne muß dabei sowohl auf die Charakteristika der verwendeten Pumpe als auch auf die Gegebenheiten des Elektromotors angepaßt sein. Da meist innerhalb der Laterne die Kupplung zwischen dem Pumpenmotor einerseits und der Motorwelle andererseits stattfindet, ist eine sehr genaue Positionierung des Elektromotors an dem Befestigungsflansch von entscheidender Bedeutung für eine lange Laufzeit der Pumpe.

Da Elektromotoren eine Vielzahl von Anwendungsmöglichkeiten haben, bieten Elektromotorhersteller häufig eine Reihe von Standardmotoren an, die sich hinsichtlich ihrer Motorleistung unterscheiden. Im allgemeinen führt eine höhere Motorleistung auch zu insgesamt größeren Abmessungen des Elektromotors, so daß der an dem Elektromotor vorgesehene Befestigungsflansch ebenfalls mit der Motorleistung variiert. Dennoch gibt es bei den meisten Motorherstellern eine begrenzte Anzahl von unterschiedlichen Motorflanschen, die für eine deutlich größere Anzahl von Motoren unterschiedlicher Ausführung und Leistung verwendet werden. Darüber hinaus gibt es Normgrößen, die von einem Großteil der Elektromotorhersteller verwendet werden.

Grundsätzlich ist es wünschenswert, die Gesamtlänge des gesamten Pumpenaufbaus bestehend aus Pumpe, Laterne und Elektromotor so kurz wie möglich auszugestalten, wobei die Verbindungsebene zwischen dem Pumpenkörper und dem Elektroantrieb gut zugänglich sein soll. Um die entsprechende Verbindung zwischen Pumpengehäuse einerseits und Elektromotor andererseits zu gewährleisten, ist es bei einigen Ausführungsformen üblich, verschiedene Laternen zu verwenden, die jeweils hinsichtlich ihrer geometrischen Abmessungen entsprechend auf die Flansch- und Wellenabmessung des Motors abgestimmt sind. Mit anderen Worten wird für jeden unterschiedlichen Motorflansch eine eigene Laternengeometrie vorgehalten. Abgesehen davon, daß dies erhöhte Herstellungs- und Lagerkosten nach sich zieht, erschwert dies auch den Austausch des Motors im Wartungsfall oder wenn die Pumpe mit einem Motor anderer Leistung ausgestattet werden soll, zumindest dann, wenn kein Motor mit geeignetem Flansch zur Verfügung steht.

Die US 6,036,452 beschreibt eine Verbindungsvorrichtung für Motoren mit Kurzwelle. Um verschieden große Pumpen mit dem Motor verbinden zu können, ist eine ringförmige Flanschebene zweiteilig ausgeführt.

Die DE 296 18 475 beschreibt eine Laterne mit einer entsprechenden eigenständigen zusätzlichen Übersetzung für die Anbindung eines Elektromotors mit abweichendem Befestigungsflansch. Hierzu wird ein Übersetzungselement einerseits mit der Laterne und andererseits mit dem Elektromotor verschraubt. Ein solches Übersetzungselement verändert jedoch die Baulänge zwischen Pumpe und Motorflansch, was weiterhin eine Anpassung der entsprechenden Verbindung zwischen Pumprotor einerseits und Motorwelle andererseits erfordert. Darüber hinaus wird hier eine weitere Verbindungsebene bereitgestellt, die gegebenenfalls mit entsprechendem Aufwand im Bereich der Fügepassungen verschraubt werden muß und damit auch die Fertigungskosten vergrößert.

Weiterhin ist es üblich, für jede Pumpengröße Sondermotoren verschiedener Leistung mit einer Motorflanschgeometrie über eine speziell ausgelegte Laterne zu verbinden. Der Aufbau des gesamten Aggregates baut sehr kurz mit wenigen Bauteilvarianten und großer Rundlaufgenauigkeit. Die Sondermotoren sind jedoch in ihrer Herstellung sehr aufwendig und an den Hersteller gebunden.

Ausgehend von diesem Stand der Technik ist es Aufgabe der Erfindung, eine möglichst einstückige Laterne bereitzustellen, welche die Anbindung verschiedenster Elektromotoren erlaubt, ohne daß die Baulänge wesentlich verändert wird. Erfindungsgemäß wird diese Aufgabe gelöst durch eine Laterne zur Verbindung einer Pumpe mit einem Motor, mit einem Flansch zur Befestigung der Laterne an einem Motor, wobei der Flansch eine Durchgangsöffnung zur Aufnahme einer Motorwelle sowie eine die Durchgangsöffnung begrenzende erste Ringfläche aufweist, wobei eine zweite Ringfläche vorgesehen ist, welche konzentrisch zur ersten, diese umgebend und sich daran anschließend, angeordnet ist, wobei die zweite Ringfläche in axialer Richtung in Richtung zur Motorseite gegenüber der ersten Ringfläche um einen Abstand d vorsteht, so daß der Flansch zwei parallele Flanschebenen bereitstellt, und wobei die zweite Ringfläche Durchgangsbohrungen zum Anschrauben eines Motorflansches aufweist und die erste Ringfläche eine erste Gruppe von Bohrungen, die im wesentlichen den gleichen Abstand vom Mittelpunkt der Ringfläche aufweisen, hat.

Durch diese Maßnahme können an dem Flansch zwei verschiedene Elektromotoren mit unterschiedlichen Motorflanschabmessungen befestigt werden. Wird ein Elektromotor mit kleinem Flansch verwendet, so kann dieser die erste Ringfläche als Anschlußflansch verwenden. Wird stattdessen ein Motor mit größerem Anschlußflansch verwendet, so kann die zweite Ringfläche als Anschlußflansch verwendet werden. Dadurch, daß die zweite Ringfläche gegenüber der ersten Ringfläche etwas vorsteht, kann die zweite Ringfläche als Flansch benutzt werden, ohne daß die erste Ringfläche sich störend auf die Befestigung auswirkt. Mit anderen Worten kann der erfindungsgemäße Flansch für zwei unterschiedliche Motorflanschabmessungen verwendet werden, ohne daß es der Verwendung eines Übersetzungselementes oder dem Austausch der Laterne bedarf.

In einer weiteren besonders bevorzugten Ausführungsform hat die Laterne ein Laternengehäuse zur Aufnahme einer Verbindung zwischen einer Motorwelle und einem Pumpmotor. Das Laternengehäuse muß nicht notwendigerweise geschlossen sein, sondern kann ein oder mehrere Fenster aufweisen, durch die auf die Verbindungsstelle zwischen Pumpenrotor und -motor zugegriffen werden kann.

Besonders zweckmäßig ist es, wenn zumindest die zweite Ringfläche in radialer Richtung über das Laternengehäuse hinausragt und auf der der Flanschebene abgewandten Seite zumindest eine, vorzugsweise mindestens drei und besonders bevorzugt vier Verstärkungsrippen aufweist. Durch diese Maßnahme kann der die zweite Ringfläche bildende Teil des Flansches sehr dünn ausgebildet sein, da die notwendige Stabilität durch die Verstärkungsrippen bereitgestellt wird. Mit Vorteil erstrecken sich die Verstärkungsrippen im wesentlichen in radialer Richtung.

Besonders vorteilhaft ist es, wenn sich diese Durchgangsbohrungen auch durch die Verstärkungsrippen erstrecken. Dadurch ist eine sichere und effektive Befestigung des Motors an dem Flansch möglich.

Bei einer weiteren besonders bevorzugten Ausführungsform sind die erste und zweite Ringfläche aus einem Teil hergestellt. Grundsätzlich ist es zwar möglich, die zweite Ringfläche als getrenntes Teil auf die erste Ringfläche aufzubringen, die einstückige Herstellung ist jedoch von Vorteil, da Fügepassungen entfallen und diese dann nicht miteinander verschraubt werden müssen.

In einer weiteren besonders bevorzugten Ausführungsform ist ein Ringelement vorgesehen, das einen Außendurchmesser hat, der kleiner als oder gleich dem Innendurchmesser der zweiten Ringfläche ist, und das vorzugsweise einen Innendurchmesser hat, der größer als der Innendurchmesser der ersten Ringfläche ist, wobei das Ringelement auf die erste Ringfläche aufgelegt werden kann. Das Ringelement ist vorzugsweise aus Blech.

Durch das Ringelement kann die Laterne an mehr als zwei unterschiedliche Motorflansche angepaßt werden.

Selbstverständlich kann das Ringelement auch mehrteilig ausgeführt sein. Dabei ist es nicht unbedingt notwendig, daß die einzelnen Teilringelemente aneinandergesetzt eine Ringform bilden. Die einzelnen Teilringelemente werden zur Befestigung anderer Motorflanschausführungen auf die erste Ringfläche aufgelegt und können zusätzlich in der Verschraubungsebene über abgesetzte Bohrungen in ihrer Position gehalten werden.

Um daher die erfindungsgemäße Laterne an einen Motor mittlerer Leistung, d.h. einen Motor mit einer mittleren Flanschgröße, zu befestigen, wird das Ringelement auf die erste Ringfläche aufgelegt, so daß der Motorflansch mit der von dem Ringelement bereitgestellten Flanschfläche in Eingriff tritt.

Weiterhin hat das Ringelement mit Vorteil in axialer Richtung eine Dicke dₐ, die gleich oder größer als der axiale Abstand d zwischen der ersten und der zweiten Ringfläche ist. Besonders bevorzugt ist die Dicke dₐ des Ringelements mindestens 0,05 mm und vorzugsweise zwischen 0,1 und 0,15 mm größer als der Abstand d. Durch diese Maßnahme wird durch das Ringelelement eine eigenständige neue Flanschebene bereitgestellt.

Weiterhin ist es von Vorteil, daß die erste Ringfläche eine zweite Gruppe von Bohrungen, die im wesentlichen den gleichen Abstand vom Mittelpunkt der Ringfläche aufweisen, hat, wobei die zweite Gruppe vom Mittelpunkt der Ringfläche weiter beabstandet ist, als die erste, und wobei das Ringelement eine Gruppe von Bohrungen aufweist, die bei auf die erste Ringfläche aufgelegtem Ringelement mit den Bohrungen der zweiten Gruppe fluchten. Die zweite Gruppe von Bohrungen dient daher für die Befestigung des Elektromotors an der Flanschebene, die durch das Ringelement bereitgestellt wird. Dabei greifen entsprechende Schrauben sowohl durch die Bohrungen im Ringelement als auch durch die Bohrungen der zweiten Gruppe der ersten Ringfläche.

Weitere Vorteile, Merkmale und Anwendungsmöglichkeiten der vorliegenden Erfindung werden deutlich anhand der Beschreibung einer bevorzugten Ausführungsform und der dazugehörigen

Figuren. Es zeigen:
- Figur 1: eine perspektivische Ansicht des erfindungsgemäßen Flansches, eines Ringelement sowie verschiedener Elektromotorgrößen
- Figur 2: eine Teilschnittansicht eines gesamten Pumpaggregats und
- Figur 3: eine Explosionsansicht einer alternativen Ausführungsform.

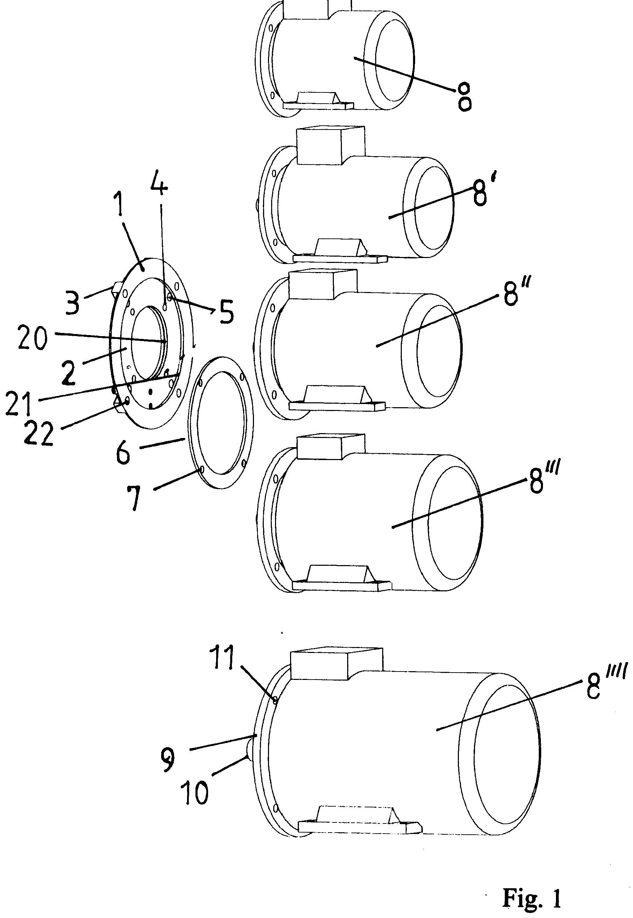

In Figur 1 sind in einer perspektivischen Ansicht insgesamt fünf verschiedene Elektromotorgrößen 8, 8', 8", 8"' und 8"" dargestellt. Diese unterscheiden sich durch unterschiedliche Motorleistungen und damit verbunden auch durch unterschiedliche Größen des Befestigungsflansches 9. Jeder Motor weist eine Motorwelle 10 auf. Solche Motoren sind seit langem bekannt und können in den verschiedensten Größen als Standardteil bei Elektromotorherstellern bezogen werden.

Weiterhin ist in Figur 1 der Motorbefestigungsflansch der Laterne 15 dargestellt. Der Motorbefestigungsflansch weist eine erste Ringfläche 2 und eine zweite Ringfläche 1 auf, wobei die zweite Ringfläche 1 gegenüber der ersten Ringfläche 2 zur motorseitigen Seite des Flansches etwas vorspringt. Durch die beiden Ringflächen 1, 2 werden zwei leicht gegeneinander versetzte Flanschebenen zur Verfügung gestellt. Soll einer der kleineren Motoren 8, 8'mit der Laterne verbunden werden, so können diese Motoren mit ihrem Flansch 9 auf die erste Ringfläche aufgesetzt werden. Der Flansch 9 der Motoren weist im allgemeinen eine kreisförmige Zentrierungsfläche auf, die derart bemessen ist, daß sie in die Flanschöffnung, die von der Ringfläche 2 gebildet wird, eintaucht, wobei die Außenfläche des Zentriervorsprungs an der Innenfläche 20 der ersten Ringfläche 2 zu liegen kommt. Die Befestigung des Motors 8 oder 8'am Flansch erfolgt mit Hilfe von Schrauben 12, die durch die Bohrungen 11 am Motorflansch und durch den inneren Bohrkreis 4 greifen.

Soll stattdessen der größte Elektromotor 8"" mit dem Flansch verbunden werden, so kommt die durch die zweite Ringfläche 1 gebildete Flanschebene zum Einsatz. Der Motorflansch 9 ist hier entsprechend größer ausgebildet, und zwar derart, daß der kreisförmige Zentriervorsprung genau an die Innenfläche 21 der zweiten Ringfläche 1 paßt. Der Motor 8"" berührt somit die erste Ringfläche 2 nicht, sondern lediglich die zweite Ringfläche 1. Befestigt wird der Motor 8"" am Flansch mit Hilfe der Bohrungen 11, die exakt zu den Bohrungen 22 in der zweiten Ringfläche 1 passen.

Es ist somit möglich, zwei verschiedene Motorgrößen an ein- und demselben Flansch zu befestigen, ohne daß irgendwelche Übersetzungselemente verwendet oder gar die gesamte Laterne 15 ausgetauscht werden muß. In der gezeigten Ausführungsform weist die zweite Ringfläche 1 Verstärkungsrippen 3 auf, die an der der Flanschebene abgewandten Seite vorgesehen sind. Durch die Verstärkungsrippen 3 kann die Dicke des die zweite Flanschebene bereitstellenden Rings sehr gering ausgeführt werden.

Soll nun statt den Elektromotoren 8, 8' oder 8"" ein Elektromotor 8" oder 8"' mit einer Zwischengröße an der Laterne 15 befestigt werden, so wird das Ringelement 6 auf die erste Ringfläche 2 aufgelegt. Das Ringelement 6 hat Bohrungen 7, die derart angeordnet sind, daß sie mit dem Bohrkreis 5 der ersten Ringfläche 2 fluchten. Die Dicke des Ring- bzw. Kreiselementes 6 ist geringfügig größer als die von der ersten Ringfläche 2 einerseits und der zweiten Ringfläche 1 gebildete Stufe 21. Dies hat zur Folge, daß durch das Ringelement 6 eine eigenständige Flanschebene zur Verfügung gestellt wird. Nun kann der Motor 8" oder 8"' an dem Flansch derart befestigt werden, daß der Motorflansch auf der von dem Ringelelement 6 bereitgestellten Flanschebene aufliegt. Der am Motor vorgesehen Zentrierungsvorsprung (nicht gezeigt) tritt nun mit der Innenfläche des Ringelementes 6 in Eingriff und wird von dieser zentriert.

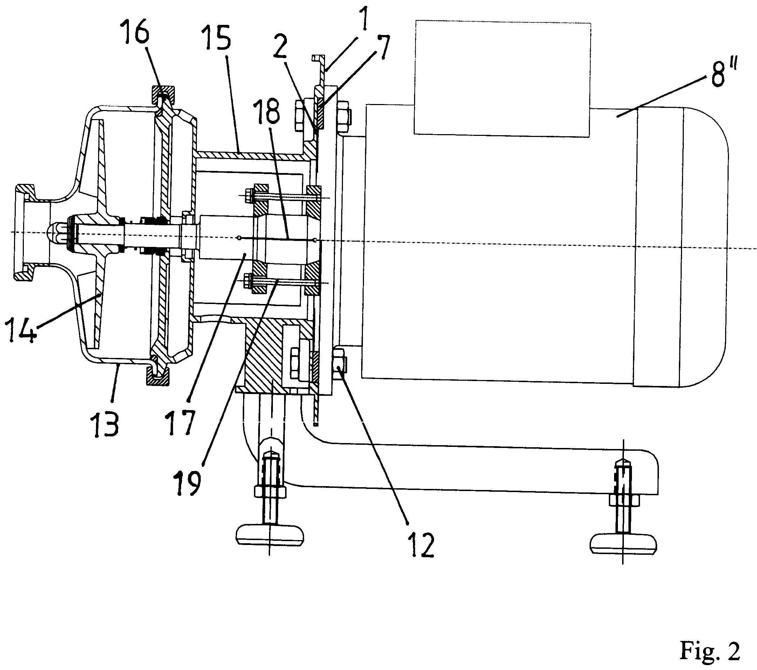

Für den Fall der Verwendung eines Motors mit mittlerem Anschlußflansch, d.h. für den Falls des Einsatzes des Ringelement 6, ist das vollständige Pumpaggregat in Figur 2 in einer Teilschnittansicht dargestellt. Die Pumpe 13 ist hier über die Verbindungseinrichtung 16 mit der Laterne 15 verbunden. Die Laterne 15 ist wiederum über den erfindungsgemäßen Universalflansch mit dem Motor 8" verbunden. Der Motor 8" liegt auf der von dem Ringelement 6 gebildeten Flanschebene auf. Die erste Ringfläche 2 sowie die zweite Ringfläche 1 werden von dem Motorflansch nicht berührt. Der Rotor 14 der Pumpe 13 weist an seinem motorseitigen Ende eine in der Laterne 15 befindliche Hülse 17 mit vier Schlitzen 18 auf. Diese Hülse 17 umfaßt die Motorwelle des Motors 8". Zur Befestigung des Rotors 14 an der Motorwelle wird die Hülse 17 mit Hilfe der Befestigungseinrichtung 19 an der Motorwelle verspannt.

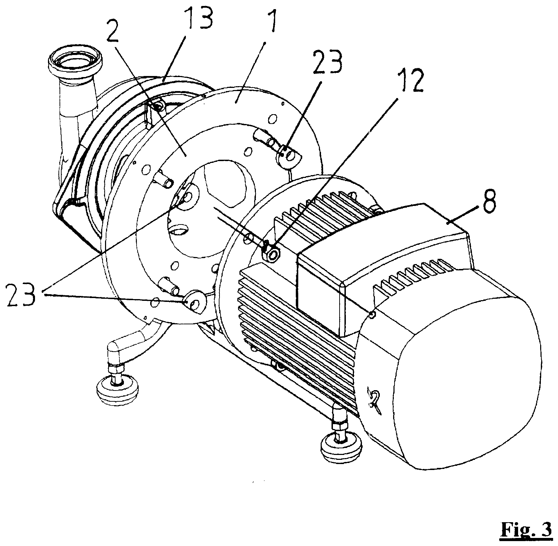

In Figur 3 ist eine alternative Ausführungsform der Erfindung dargestellt. Die in Figur 3 gezeigte Explosionsansicht zeigt einen Motor 8 und eine Pumpe 13. Zwischen dem Motor 8 und der Pumpe 13 ist die Laterne angeordnet, die einen Anschlußflansch aufweist, der eine erste Ringfläche 2 und eine zweite Ringfläche 1 aufweist. Das Ringelement 6 ist hier nicht ringförmig, sondern besteht lediglich aus vier einzelnen linsenförmigen Teilringelementen 23. Diese Teilringelemente 23 werden auf die erste Ringfläche 2 aufgelegt.

Mit Vorteil haben die Teilringelemente 23 etwa die Form von Unterlegscheiben, wobei die Außenkanten im wesentlichen an die innere Zentrierfläche der zweiten Ringfläche angepaßt sind. Die nach innen weisenden Kantenflächen stellen vier Anschlagpunkte bereit, die zur Zentrierung des Motors vorgesehen sind.

Weiterhin kann es von Vorteil sein, wenn - wie in Figur 3 gezeigt - die Befestigungsbohrungen 5 als Stufenbohrung ausgebildet ist, d.h. an ihrem dem Teilringelement oder dem Ringelement zugewandten Ende sich erweitert. Das Teilringelement oder das Ringelement weist dann entsprechende kragenartige Vorsprünge aus, die in den erweiterten Bereich der Befestigungsbohrungen eingreifen. Bei dieser Ausführungsform wird das Ringelement bzw. das Teilringelement in die abgesetzten Bohrungen eingesetzt.

### Bezugszeichenliste

- 1: zweite Ringfläche
- 2: erste Ringfläche
- 3: Verstärkungsrippen
- 4: erste Bohrungsgruppe der ersten Ringfläche
- 5: zweite Bohrungsgruppe der ersten Ringfläche
- 6: Ringelement
- 7: Bohrungen
- 8, 8', 8", 8"', 8"": Elektromotor
- 9: Motorflansch
- 10: Motorwelle
- 11: Bohrungen im Motorflansch
- 12: Befestigungsschrauben
- 13: Pumpe
- 14: Rotor
- 15: Laterne
- 16: Verbindungseinrichtung
- 17: Hülse
- 18: Schlitze
- 19: Befestigungseinrichtung
- 20: innere Zentrierfläche der ersten Ringfläche
- 21: innere Zentrierfläche der zweiten Ringfläche
- 22: dritte Bohrungsgruppe der zweiten Ringfläche
- 23: Teilringelemente

## Patentansprüche

1. Pumpaggregat, insbesondere Kreiselpumpenaggregat, mit einer Pumpe, einem Motor sowie einer Laterne (15) zur Verbindung von Pumpe und Motor, wobei die Laterne einen Flansch, an dem der Motor befestigt ist, hat, wobei der Flansch eine Durchgangsöffnung, in welcher eine Motorwelle (10) aufgenommen ist, sowie eine die Durchgangsöffnung begrenzende erste Ringfläche (2) aufweist, **dadurch gekennzeichnet, daß** eine zweite Ringfläche (1) vorgesehen ist, welche konzentrisch zur ersten, diese umgebend und sich daran anschließend angeordnet ist, wobei die zweite Ringfläche 1 in axialer Richtung in Richtung zur Motorseite gegenüber der ersten Ringfläche (2) um einen Abstand d (21) vorsteht, so daß der Flansch (9) zwei parallele Flanschebenen bereitstellt, und wobei die zweite Ringfläche (1) Durchgangsbohrungen (22) zum Anschrauben eines Motorflansches aufweist und die erste Ringfläche (2) eine erste Gruppe von Bohrungen (4), die im wesentlichen den gleichen Abstand vom Mittelpunkt der Ringfläche aufweisen, hat, und wobei der Motor einen Anschlußflansch (9) hat, der eine im wesentlichen kreisförmige oder teilkreisförmige Zentrierungsfläche aufweist, deren Außendurchmesser im wesentlichen dem Innendurchmesser der ersten oder zweiten Ringfläche entspricht, und die Zentrierungsfläche in die von der ersten oder zweiten gebildete Durchgangsöffnung eintaucht.

2. Pumpaggregat nach Anspruch 1, **dadurch gekennzeichnet, daß** die Laterne (15) ein Laternengehäuse zur Aufnahme einer Verbindung zwischen einer Motorwelle (10) und einem Pumpenrotor (14) aufweist.

3. Pumpaggregat nach Anspruch 2, **dadurch gekennzeichnet, daß** zumindest die zweite Ringfläche (1) in radialer Richtung über das Laternengehäuse hinausragt und auf der der Flanschebene abgewandten Seite zumindest eine, vorzugsweise mindestens drei und besonders bevorzugt vier Verstärkungsrippen (3) aufweist.

4. Pumpaggregat nach Anspruch 3, **dadurch gekennzeichnet, daß** die Verstärkungsrippen (3) im wesentlichen in radialer Richtung ausgerichtet sind.

5. Pumpaggregat nach Anspruch 4, **dadurch gekennzeichnet, daß** die Durchgangsbohrungen (22) durch die Verstärkungsgrippen (3) verlaufen.

6. Pumpaggregat nach einem der Ansprüche 1 bis 5, **dadurch gekennzeichnet, daß** die erste und zweite Ringfläche (1, 2) einstückig ausgebildet sind.

7. Pumpaggregat nach einem der Ansprüche 1 bis 6, **dadurch gekennzeichnet, daß** ein Ringelement (6) mit einem Außendurchmesser, der kleiner als oder gleich dem Innendurchmesser der zweiten Ringfläche (1) ist, und vorzugsweise einem Innendurchmesser, der größer als der Innendurchmesser der ersten Ringfläche (2) ist, vorgesehen ist, wobei das Ringelement (6) auf die erste Ringfläche (2) aufgelegt werden kann.

8. Pumpaggregat nach Anspruch 7, **dadurch gekennzeichnet, daß** das Ringelement (6) aus mehreren, vorzugsweise vier Teilen (23) besteht.

9. Pumpaggregat nach Anspruch 7 oder 8, **dadurch gekennzeichnet, daß** das Ringelement (6) in axialer Richtung eine Dicke dₐ hat, die gleich oder größer als der Abstand d ist, so daß das Ringelement (6) eine dritte Ringfläche bildet

10. Pumpaggregat nach Anspruch 9, **dadurch gekennzeichnet, daß** die Dicke dₐ des Ringelements (6) mindestens 0,05 und vorzugsweise zwischen 0,1 und 0,15 mm größer als der Abstand d ist.

11. Pumpaggregat nach einem der Ansprüche 7 bis 10, **dadurch gekennzeichnet, daß** die erste Ringfläche (2) eine zweite Gruppe von Bohrungen (5), die im wesentlichen den gleichen Abstand vom Mittelpunkt der Ringfläche aufweisen, hat, wobei die zweite Gruppe von Bohrungen (5) vom Mittelpunkt der Ringfläche weiter beanstandet ist als die erste Gruppe von Bohrungen (4), und daß das Ringelement eine Gruppe von Bohrungen (7) aufweist, die bei auf die erste Ringfläche (2) aufgelegtem Ringelelement (6) mit den Bohrungen (5) der zweiten Gruppe fluchten.

12. Pumpaggregat nach Anspruch 11, **dadurch gekennzeichnet, daß** die zweite Gruppe von Bohrungen (5) als abgesetzte Bohrungen ausgeführt sind und das Ringelement Vorsprünge hat, die derart ausgebildet sind, daß sie in die abgesetzten Bohrungen eingreifen.

## Claims

1. Pump aggregate, in particular centrifugal pump aggregate, comprising a pump, a motor as well as a lantern (15) for connecting the pump and the motor, wherein the lantern comprises a flange to which the motor is mounted to, wherein the flange comprises a passage opening in which a motor shaft (10) is received as well as a first ring face (2) limiting the passage opening, **characterized in that** a second ring face (1) is provided, which is concentrically with respect to the first one, surrounds the same and is arranged subsequently thereto, wherein the second ring face (1) projects by a distance d (21) in axial direction in the direction of the motor side with respect to the first ring face (2), such that the flange (9) provides two parallel flange planes, and wherein the second ring face (1) comprises through bores (22) for screwing on a motor flange and the first ring face (2) comprises a first group of bores (4), which substantially have the same distance from the center of the ring face, and wherein the motor comprises a connecting flange (9), which comprises a substantially circular or partly circular centering face, the outer diameter of which substantially corresponds to the inner diameter of the first or second ring face, and the centering face plunges into the passage opening formed by the first or second ring face.

2. Pump aggregate according to claim 1, **characterized in that** the lantern (15) comprises a lantern housing for receiving a connection between a motor shaft (10) and a pump rotor (14).

3. Pump aggregate according to claim 2, **characterized in that** at least the second ring face (1) projects beyond the lantern housing at least in the radial direction and comprises at least one, preferably three and particularly preferably four reinforcing ribs (3) on the side facing away from the flange plane.

4. Pump aggregate according to claim 3, **characterized in that** the reinforcing ribs (3) are substantially arranged in the radial direction.

5. Pump aggregate according to claim 4, **characterized in that** the through bores (22) run through the reinforcing ribs (3).

6. Pump aggregate according to one of claims 1 to 5, **characterized in that** the first and second ring face (1, 2) are formed integrally.

7. Pump aggregate according to one of claims 1 to 6, **characterized in that** a ring element (6) is provided having an outer diameter which is smaller than or equal to the inner diameter of the second ring face (1) and preferably having an inner diameter which is greater than the inner diameter of the first ring face (2), wherein the ring element (6) can be mounted on the first ring face (2).

8. Pump aggregate according to claim 7, **characterized in that** the ring element (6) consists of a plurality, preferably four parts (23).

9. Pump aggregate according to claim 7 or 8, **characterized in that** the ring element (6) has a thickness dₐ in the axial direction, which is equal to or greater than the distance d, such that the ring element (6) forms a third ring face.

10. Pump aggregate according to claim 9, **characterized in that** the thickness dₐ of the ring element (6) is at least 0.05 and preferably between 0.1 and 0.15 mm greater than the distance d.

11. Pump aggregate according to one of claims 7 to 10, **characterized in that** the first ring face (2) comprises a second group of bores (5), which substantially have the same distance from the center of the ring face, wherein the second group of bores (5) has a greater distance from the center of the ring face than the first group of bores (4), and that the ring element comprises a group of bores (7), which align with the bores (5) of the second group when the ring element (6) is mounted on the first ring face (2).

12. Pump aggregate according to claim 11, **characterized in that** the second group of bores (5) are designed as offset bores and the ring element comprises projections, which are designed in such a way that they engage into the offset bores.

## Revendications

1. Ensemble pompe, en particulier ensemble pompe centrifuge, comprenant une pompe, un moteur ainsi qu'une lanterne (15) destinée à relier la pompe et le moteur, la lanterne présentant une bride à laquelle le moteur est fixé, la bride présentant un orifice de passage dans lequel un arbre du moteur (10) est reçu, ainsi qu'une première surface annulaire (2) délimitant l'orifice de passage, **caractérisé en ce qu'**une deuxième surface annulaire (1) est prévue, laquelle est agencée de manière concentrique par rapport à la première surface en entourant celle-ci et en y étant adjacente, la deuxième surface annulaire (1) faisant saillie d'une distance d (21) dans le sens axial en direction du côté moteur par rapport à la première surface annulaire (2), de sorte que la bride (9) fournit deux plans parallèles de bride, et la deuxième surface annulaire (1) présentant des orifices de passage (22) permettant le vissage d'une bride de moteur et la première surface annulaire (2) présentant un premier groupe d'alésages (4), qui sont sensiblement à équidistance du centre de la surface annulaire, et le moteur présentant une bride de raccordement (9) qui comporte une surface de centrage sensiblement circulaire ou en arc de cercle, dont le diamètre extérieur correspond sensiblement au diamètre intérieur de la première ou de la deuxième surface annulaire, et la surface de centrage pénétrant dans l'orifice de passage formé par la première ou la deuxième surface annulaire.

2. Ensemble pompe selon la revendication 1, **caractérisé en ce que** la lanterne (15) comprend un boîtier de lanterne destiné à recevoir une liaison entre un arbre du moteur (10) et un rotor de pompe (14).

3. Ensemble pompe selon la revendication 2, **caractérisé en ce qu'**au moins la deuxième surface annulaire (1) fait saillie dans la direction radiale au-delà du boîtier de lanterne et présente sur la face opposée au plan de la bride au moins une, de préférence au moins trois et de manière particulièrement préférée quatre nervures de renforcement (3).

4. Ensemble pompe selon la revendication 3, **caractérisé en ce que** les nervures de renforcement (3) sont orientées sensiblement dans la direction radiale.

5. Ensemble pompe selon la revendication 4, **caractérisé en ce que** les orifices de passage (22) s'étendent à travers les nervures de renforcement (3).

6. Ensemble pompe selon l'une quelconque des revendications 1 à 5, **caractérisé en ce que** la première et la deuxième surface annulaire (1, 2) sont réalisées d'une seule pièce.

7. Ensemble pompe selon l'une quelconque des revendications 1 à 6, **caractérisé en ce qu'**un élément annulaire (6) présentant un diamètre extérieur qui est inférieur ou égal au diamètre intérieur de la deuxième surface annulaire (1), et de préférence un diamètre intérieur qui est supérieur au diamètre intérieur de la première surface annulaire (2), est prévu, l'élément annulaire (6) pouvant être posé sur la première surface annulaire (2).

8. Ensemble pompe selon la revendication 7, **caractérisé en ce que** l'élément annulaire (6) est constitué de plusieurs, de préférence de quatre pièces (23).

9. Ensemble pompe selon la revendication 7 ou 8, **caractérisé en ce que** l'élément annulaire (6) présente dans la direction axiale une épaisseur dₐ, qui est supérieure ou égale à la distance d, de sorte que l'élément annulaire (6) forme une troisième surface annulaire.

10. Ensemble pompe selon la revendication 9, **caractérisé en ce que** l'épaisseur dₐ de l'élément annulaire (6) est supérieur à la distance d d'au moins 0,05 et de préférence d'une valeur comprise entre 0,1 mm et 0,15 mm.

11. Ensemble pompe selon l'une quelconque des revendications 7 à 10, **caractérisé en ce que** la première surface annulaire (2) comporte un deuxième groupe d'alésages (5), qui sont sensiblement équidistants du centre de la surface annulaire, le deuxième groupe d'alésages (5) étant plus éloigné du centre de la surface annulaire que le premier groupe d'alésages (4), et **en ce que** l'élément annulaire présente un groupe d'alésages (7) qui sont alignés sur les alésages (5) du deuxième groupe lorsque l'élément annulaire (6) est posé sur la première surface annulaire (2).

12. Ensemble pompe selon la revendication 11, **caractérisé en ce que** le deuxième groupe d'alésages (5) est réalisé sous la forme d'alésages étagés et **en ce que** l'élément annulaire présente des parties saillantes qui sont réalisées de telle manière qu'elles s'insèrent dans les alésages étagés.
